# EUROPEAN PATENT APPLICATION

(11) **EP 4 797 780 A1**
(43) Date of publication of application: **26.08.2026**
(21) Application number: 24884293.2
(22) Date of filing: 20.09.2024
(51) Int. Cl.: H04W 28/02

(54) **COMMUNICATION METHOD AND APPARATUS**

(30) Priority: 03.11.2023 CN 202311461770
(71) Applicant: HUAWEI TECHNOLOGIES CO., LTD., Shenzhen, Guangdong 518129 (CN)
(72) Inventor: LI, Bingzhao, Shenzhen, Guangdong 518129 (CN); CHANG, Junren, Shenzhen, Guangdong 518129 (CN); LIU, Nannan, Shenzhen, Guangdong 518129 (CN)
(74) Representative: Isarpatent
(86) International application number: PCT/CN2024/120068
(87) International publication number: WO 2025/092286

(57) **Abstract**

This application discloses a communication method and apparatus. The method includes: An access network device receives configuration information of a QoS flow, where the configuration information of the QoS flow includes a first value and a second value of each of M QoS parameters; and transmits a data packet in the QoS flow based on a third value of each of the M QoS parameters, where a transmission requirement corresponding to the third value of each of the M QoS parameters is lower than or equal to a transmission requirement corresponding to the first value of the QoS parameter, and higher than or equal to a transmission requirement corresponding to the second value of the QoS parameter. According to the method, the first value and the second value of each of the M QoS parameters are configured for the access network device, so that the access network device can quickly adjust a transmission requirement corresponding to the QoS flow, to quickly adapt to different transmission conditions.

## Description

### CROSS-REFERENCE TO RELATED APPLICATIONS

This application claims priority to Chinese Patent Application No. 202311461770.1, filed with the China National Intellectual Property Administration on November 3, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In mobile communication networks, operators can provide more diversified services such as voice, data, and video services for users. Different services have different requirements on a delay, bandwidth, and the like. Therefore, a quality of service (quality of service, QoS) solution is introduced, to implement differentiation of various services, guarantee high-speed data services, and enhance user network experience. An objective of the QoS solution is to provide network services with different quality of service based on various service requirements.

However, in some new service scenarios, for example, in a device-cloud collaboration scenario, a transmission requirement corresponding to a QoS flow is high. When a transmission condition changes, for example, when resources of an access network device are insufficient or a channel of a terminal device deteriorates, the transmission requirement corresponding to the QoS flow may not be met. Therefore, the transmission requirement corresponding to the QoS flow needs to be adjusted through QoS reconfiguration. Generally, a delay required for QoS reconfiguration is high. As a result, different transmission conditions cannot be quickly adapted to, affecting user experience.

### SUMMARY

This application provides a communication method and apparatus, to configure a first value and a second value of each of M QoS parameters for an access network device, so that the access network device can quickly adjust a transmission requirement corresponding to a QoS flow, to quickly adapt to different transmission conditions.

**According to a first aspect,** an embodiment of this application provides a communication method. The method may be applied to an access network device or a module (for example, a chip or a circuit) in the access network device. For example, the method is applied to the access network device. In the method, the access network device receives configuration information of a quality of service QoS flow from a core network device, where the configuration information of the QoS flow includes a first value and a second value of each of M QoS parameters; determines a third value of each of the M QoS parameters based on the first value and the second value of the QoS parameter in the M QoS parameters; and transmits a data packet in the QoS flow based on the third value of each of the M QoS parameters, where a transmission requirement corresponding to the third value of each of the M QoS parameters is lower than or equal to a transmission requirement corresponding to the first value of the QoS parameter, and higher than or equal to a transmission requirement corresponding to the second value of the QoS parameter.

According to the foregoing method, the first value and the second value of each of the M QoS parameters are configured for the access network device, so that the access network device can flexibly determine the third value of each QoS parameter based on the first value and the second value of the QoS parameter. Because the access network device can flexibly determine the third value of each QoS parameter, when a transmission condition changes, the access network device can adjust the third value of the QoS parameter between the first value and the second value of the QoS parameter, and the core network device does not need to adjust a value of the QoS parameter through QoS reconfiguration. Therefore, a transmission requirement corresponding to the QoS flow can be quickly adjusted, to quickly adapt to different transmission conditions. For example, the access network device may transmit the data packet in the QoS flow based on basic transmission requirements (each QoS parameter is set to the first value) as much as possible, and when a current transmission condition cannot meet the basic transmission requirements, may perform a relaxed transmission on the data packet in the QoS flow, that is, transmit the data packet in the QoS flow based on transmission requirements lower than the basic transmission requirements.

In a possible design, the configuration information of the QoS flow includes first indication information, and the first indication information indicates that, when a third value of at least one of the M QoS parameters changes, the core network device does not need to be notified.

In this way, the access network device can flexibly update the third value of the at least one of the M QoS parameters, and the core network device does not need to perform QoS reconfiguration, thereby reducing signaling overheads and improving efficiency of adjusting the transmission requirement corresponding to the QoS flow.

In a possible design, the configuration information of the QoS flow further includes a first value of each of N QoS parameters; and transmitting the data packet in the QoS flow based on the third value of each of the M QoS parameters includes: transmitting the data packet in the QoS flow based on the third value of each of the M QoS parameters and the first value of each of the N QoS parameters.

In a possible design, the configuration information of the QoS flow includes first QoS description information, and the first QoS description information includes the first value and the second value of each of the M QoS parameters; or the configuration information of the QoS flow includes second QoS description information and third QoS description information, the second QoS description information includes the first value of each of the M QoS parameters, and the second QoS description information includes the second value of each of the M QoS parameters.

In a possible design, the QoS flow includes a first data packet and a second data packet, a transmission metric of the first data packet meets the transmission requirement corresponding to the first value of each of the M QoS parameters, and the second data packet is a data packet other than the first data packet in the QoS flow; and a ratio of a quantity of second data packets to a total quantity of data packets in the QoS flow is less than or equal to a threshold. This helps avoid impact on user experience due to an excessive quantity of data packets for the relaxed transmission.

In a possible design, the threshold is included in the configuration information of the QoS flow, or the threshold is preconfigured.

In a possible design, the QoS flow includes the first data packet and the second data packet, the transmission metric of the first data packet meets the transmission requirement corresponding to the first value of each of the M QoS parameters, and the second data packet is a data packet other than the first data packet in the QoS flow; and the method further includes: determining a first ratio of a quantity of first data packets to the total quantity of data packets in the QoS flow, and/or a second ratio of the quantity of second data packets to the total quantity of data packets in the QoS flow; and sending the first ratio and/or the second ratio to the core network device. In this way, a proportion between data packets transmitted based on different transmission requirements is notified to the core network device, to facilitate differentiated charging.

In a possible design, the method further includes: sending, to a terminal device, configuration information of a data radio bearer DRB corresponding to the QoS flow, where the configuration information of the DRB is determined based on the second value of each of the M QoS parameters.

In this way, because the core network device configures the first value and the second value of each of the M QoS parameters for the access network device, the access network device can configure, based on the second value of each of the M QoS parameters, the DRB corresponding to the QoS flow, that is, configure the DRB based on a lowest transmission requirement, to avoid that the relaxed transmission cannot be performed because the DRB is configured based on a highest transmission requirement.

In a possible design, the configuration information of the DRB includes duration of a discard timer corresponding to the data packet in the QoS flow.

In a possible design, the method further includes: receiving second indication information from the terminal device, where the second indication information indicates a recommended third value of each of the M QoS parameters. For example, the terminal device may send the second indication information to the access network device based on service experience awareness information of a user, to improve user experience.

In a possible design, the M QoS parameters include at least one of the following: a transmission delay, a transmission reliability, and a transmission rate.

**According to a second aspect,** an embodiment of this application provides a communication method. The method may be applied to a core network device or a module (for example, a chip or a circuit) in the core network device. For example, the method is applied to the core network device. In the method, the core network device determines configuration information of a QoS flow, where the configuration information of the QoS flow includes a first value and a second value of each of M QoS parameters, the first value and the second value of each of the M QoS parameters are used to determine a third value of the QoS parameter, and the third value of each of the M QoS parameters is used to transmit a data packet in the QoS flow; and sends the configuration information of the QoS flow to an access network device and/or a terminal device, where a transmission requirement corresponding to the third value of each of the M QoS parameters is lower than or equal to a transmission requirement corresponding to the first value of the QoS parameter, and higher than or equal to a transmission requirement corresponding to the second value of the QoS parameter.

In a possible design, the configuration information of the QoS flow includes first indication information, and the first indication information indicates that, when a third value of at least one of the M QoS parameters changes, the core network device does not need to be notified.

In a possible design, the configuration information of the QoS flow includes first QoS description information, and the first QoS description information includes the first value and the second value of each of the M QoS parameters; or the configuration information of the QoS flow includes second QoS description information and third QoS description information, the second QoS description information includes the first value of each of the M QoS parameters, and the second QoS description information includes the second value of each of the M QoS parameters.

In a possible design, the QoS flow includes a first data packet and a second data packet, a transmission metric of the first data packet meets the transmission requirement corresponding to the first value of each of the M QoS parameters, and the second data packet is a data packet other than the first data packet in the QoS flow; and the configuration information of the QoS flow includes a threshold, and a ratio of a quantity of second data packets to a total quantity of data packets in the QoS flow is less than or equal to the threshold.

In a possible design, the QoS flow includes the first data packet and the second data packet, the transmission metric of the first data packet meets the transmission requirement corresponding to the first value of each of the M QoS parameters, and the second data packet is a data packet other than the first data packet in the QoS flow; and the method further includes: receiving a first ratio of a quantity of first data packets to the total quantity of data packets in the QoS flow, and/or a second ratio of the quantity of second data packets to the total quantity of data packets in the QoS flow.

**According to a third aspect,** an embodiment of this application provides a communication method. The method may be applied to a terminal device or a module (for example, a chip or a circuit) in the terminal device. For example, the method is applied to the terminal device. In the method, the terminal device receives configuration information of a QoS flow from a core network device, where the configuration information of the QoS flow includes a first value and a second value of each of M QoS parameters; and determines, based on the configuration information of the QoS flow, that a data packet in the QoS flow supports a relaxed transmission.

In a possible design, the method further includes: sending second indication information to an access network device, where the second indication information indicates a recommended third value of at least one of the M QoS parameters.

In a possible design, the method further includes: receiving configuration information of a data radio bearer DRB corresponding to the QoS flow, where the configuration information of the DRB is determined based on the second value of each of the M QoS parameters.

In a possible design, the configuration information of the DRB includes duration of a discard timer corresponding to the data packet in the QoS flow.

It may be understood that, for beneficial effect of related technical features in the second aspect and the third aspect, refer to the descriptions of the first aspect. Details are not described again.

**According to a fourth aspect,** this application provides a communication apparatus. The communication apparatus can implement functions in the first aspect to the third aspect. For example, the communication apparatus includes a corresponding module, unit, or means for performing operations in the first aspect to the third aspect. The function, the unit, or the means may be implemented by software, may be implemented by hardware, or may be implemented by hardware by executing corresponding software.

In a possible design, the communication apparatus includes a processing unit and a communication unit. The communication unit may be configured to receive and send signals, to implement communication between the communication apparatus and another apparatus. For example, the communication unit is configured to send system information to a terminal. The processing unit may be configured to perform some internal operations of the communication apparatus. Functions performed by the processing unit and the communication unit may correspond to the operations in the first aspect to the third aspect.

In a possible design, the communication apparatus includes a processor. The processor may be configured to be coupled to a memory. The memory may store a necessary computer program or necessary instructions for implementing the functions in the first aspect to the third aspect. The processor may execute the computer program or the instructions stored in the memory. When the computer program or the instructions are executed, the communication apparatus is enabled to implement the method according to any possible design or implementation of the first aspect to the third aspect.

In a possible design, the communication apparatus includes a processor and a memory. The memory may store a necessary computer program or necessary instructions for implementing the functions in the first aspect to the third aspect. The processor may execute the computer program or the instructions stored in the memory. When the computer program or the instructions are executed, the communication apparatus is enabled to implement the method according to any possible design or implementation of the first aspect to the third aspect.

In a possible design, the communication apparatus includes a processor and an interface circuit. The processor is configured to: communicate with another apparatus through the interface circuit, and perform the method according to any possible design or implementation of the first aspect to the third aspect.

It may be understood that, in the fourth aspect, the processor may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and there may be one or more memories. The memory may be integrated with the processor, or the memory and the processor are separately disposed. In a specific implementation process, the memory and the processor may be integrated into a same chip, or may be respectively disposed on different chips. A type of the memory and a manner of disposing the memory and the processor are not limited in embodiments of this application.

**According to a fifth aspect,** this application provides a communication system. The communication system may include a first network device, a second network device, and a terminal. The first network device is configured to perform the method according to the first aspect, the second network device is configured to perform the method according to the second aspect, and the terminal is configured to perform the method according to the third aspect.

**According to a sixth aspect,** this application provides a computer-readable storage medium. The computer storage medium stores computer-readable instructions. When a computer reads and executes the computer-readable instructions, the computer is enabled to perform the method according to any possible design of the first aspect to the third aspect.

For example, the computer-readable storage medium may be any usable medium that is accessible by a computer. By way of example and not limitation, the computer-readable medium may include a non-transitory computer-readable medium, a random-access memory (random-access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store expected program code in a form of instructions or a data structure and that is accessible by the computer.

**According to a seventh aspect,** this application provides a computer program product. When a computer reads and executes the computer program product, the computer is enabled to perform the method according to any possible design of the first aspect to the third aspect.

**According to an eighth aspect,** this application provides a chip. The chip includes a processor. The processor is coupled to a memory, and is configured to: read and execute a software program stored in the memory, to implement the method according to any possible design of the first aspect to the third aspect.

### BRIEF DESCRIPTION OF DRAWINGS

FIG. 1A and FIG. 1B are diagrams of two network architectures according to an embodiment of this application;
FIG. 2 is an example diagram of a protocol layer structure according to an embodiment of this application;
FIG. 3 is a diagram of a relationship between a quantity of transmissions, a transmission reliability, and resource overheads according to an embodiment of this application;
FIG. 4 is a schematic flowchart corresponding to a communication method according to an embodiment of this application;
FIG. 5 is a possible example block diagram of an apparatus according to an embodiment of this application;
FIG. 6 is a diagram of a structure of a communication apparatus according to an embodiment of this application; and
FIG. 7 is a diagram of a structure of a communication apparatus according to an embodiment of this application.

### DESCRIPTION OF EMBODIMENTS

The following describes technical solutions in embodiments of this application with reference to accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system, for example, a long term evolution (long term evolution, LTE) system, a 5th generation (5th generation, 5G) mobile communication system, for example, a new radio (new radio, NR) system, and a future evolved communication system, for example, a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all the devices, components, modules, and the like discussed with reference to the accompanying drawings. In addition, a combination of these solutions may alternatively be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is intended to present a concept in a specific manner. In embodiments of this application, "of (of)", "corresponding, relevant (corresponding, relevant)", and "corresponding (corresponding)" may be interchangeably used sometimes. It should be noted that meanings expressed by the terms are consistent when differences between the terms are not emphasized.

The communication system and a service scenario that are described in embodiments of this application are intended to describe the technical solutions in embodiments of this application more clearly, and do not constitute a limitation on the technical solutions provided in embodiments of this application. A person of ordinary skill in the art may learn that, with evolution of a network architecture and emergence of a new service scenario, the technical solutions provided in embodiments of this application are also applicable to similar technical problems.

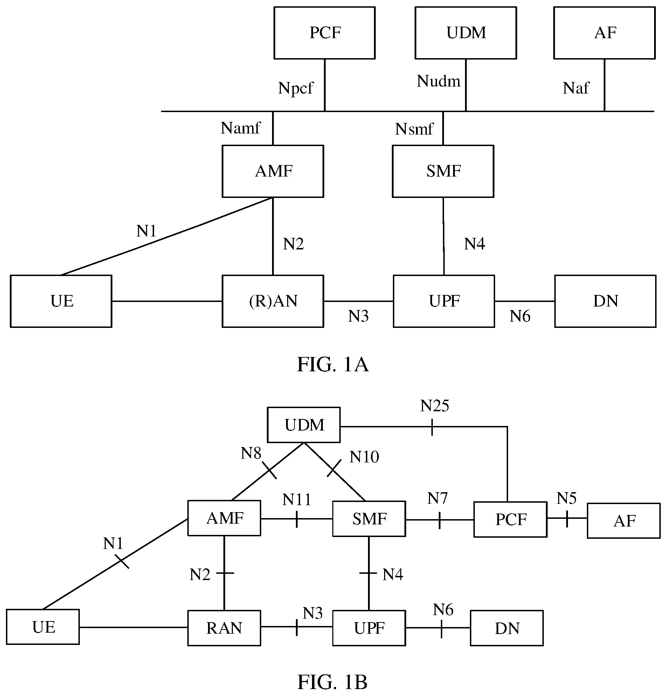

FIG. 1A and FIG. 1B are diagrams of two network architectures according to an embodiment of this application. The network architecture shown in FIG. 1A is a network architecture of a 5G communication system based on a service-oriented interface. The network architecture shown in FIG. 1B is a network architecture of a 5G communication system based on a point-to-point interface. As shown in FIG. 1A or FIG. 1B, a terminal device may access a wireless network, to obtain a service of an external network (for example, a data network (data network, DN)) through the wireless network, or communicate with another device through the wireless network. The wireless network may also be referred to as an operator network, and may include a (radio) access network ((radio) access network, (R)AN) and a core network (core network, CN). The (R)AN (described as a RAN below) is configured to connect the terminal device to the wireless network. The CN is configured to: manage the terminal device and provide a gateway for communicating with the DN.

The following separately describes in detail the terminal device, the RAN, the CN, and the DN.

### (1) Terminal device

The terminal device is a device that provides voice and/or data connectivity for a user. The terminal device may also be referred to as user equipment (user equipment, UE), a terminal (terminal), an access terminal, a terminal unit, a terminal station, a mobile station (mobile station, MS), a remote station, a remote terminal, a mobile terminal (mobile terminal, MT), a wireless communication device, a terminal agent, terminal equipment, or the like.

For example, the terminal device may be a handheld device having a wireless connection function, or may be a vehicle having a communication function, or a vehicle-mounted device (for example, a vehicle-mounted communication apparatus or a vehicle-mounted communication chip). Currently, some examples of the terminal device are a mobile phone (mobile phone), a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a compute device, another processing device connected to a wireless modem, a tablet computer, a computer with a wireless transceiver function, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

The terminal device may alternatively be a terminal in an internet of things (Internet of things, IoT) system. An IoT is an important part in future information technology development. A main technical feature of the IoT is to connect a thing to a network through a communication technology, to implement an intelligent network for human-machine interconnection and thing-thing interconnection. An IoT technology may implement massive connections and deep coverage through, for example, a narrowband (narrowband, NB) technology.

It should be understood that the terminal device may be any device that can access a network. The terminal device may communicate with an access network device through an air interface technology.

Optionally, the terminal device may be configured to serve as a base station. For example, the terminal device may serve as a scheduling entity that provides a sidelink signal between terminal devices in a scenario like a V2X scenario or a D2D scenario. For example, a cellular phone communicates with a car through a sidelink signal. The cellular phone communicates with a smart home device without relaying a communication signal through a base station.

### (2) RAN

The RAN may include one or more access network elements (or referred to as access network devices). An interface between the access network device and the terminal device may be a Uu interface (or referred to as an air interface). The access network device is configured to provide a network access function for authorized user equipment in a specific area, and can use transmission tunnels with different quality of service based on a level of the user equipment, a service requirement, and the like. The access network device can manage a radio resource, provide an access service for the terminal device, and then forward a control signal and data between the terminal device and the core network.

The access network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The access network device may be a macro base station, a micro base station, an indoor base station, a relay node or a donor node, or a radio controller in an open radio access network (open RAN, O-RAN, or ORAN) scenario or a cloud radio access network (cloud radio access network, CRAN) scenario. Optionally, the access network device may alternatively be a server, a wearable device, a vehicle, a vehicle-mounted device, or the like. For example, an access network device in a vehicle to everything (vehicle to everything, V2X) technology may be a road side unit (road side unit, RSU). All or a part of functions of the access network device in this application may alternatively be implemented through a software function running on hardware, or may be implemented through a virtualization function instantiated on a platform (for example, a cloud platform).

The access network device in this application may alternatively be a logical node, a logical module, or software that can implement all or a part of the functions of the access network device. For example, the access network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

### (3) CN

The CN may include one or more core network elements (or referred to as core network devices). For example, the CN may include an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, and an application function (application function, AF) network element.

AMF network element: The access and mobility management function network element is mainly used for mobility management, access management, and the like, and may be configured to implement a function other than session management in an MME function, for example, a function like access authorization/authentication.

SMF network element: is mainly configured to manage a session, allocate and manage an internet protocol (internet protocol, IP) address of user equipment, select an endpoint that can manage a user plane function and a policy control and charging function interface, perform downlink data notification, and the like.

UPF network element: is used for packet routing and forwarding, quality of service (quality of service, QoS) processing of user plane data, and the like.

PCF network element: is configured to support a unified policy framework that governs network behavior, and provide policy rule information and the like for a control plane function network element (for example, the AMF or SMF network element).

UDM network element: is configured to process a UE identifier, and perform access authentication, registration, mobility management, and the like.

AF network element: is configured to perform application-affected data routing, wirelessly access a network exposure function network element, and interact with a policy framework to perform policy control, and the like.

In addition, although not shown, the CN may further include another possible network element, for example, a unified data repository (unified data repository, UDR), a short message service function (short message service function, SMSF) network element, or an authentication server function (authentication server function, AUSF) network element. The UDR is configured to store user information and subscription information. The user information may be understood as identification information of the terminal device, for example, a permanent identifier of the terminal device.

A network element in embodiments of this application may also be referred to as an entity or a functional entity. For example, the AMF network element may also be referred to as an AMF entity or an AMF apparatus, and the SMF network element may also be referred to as an SMF entity or an SMF apparatus. The network element may be a network element in a hardware device, or may be a software function running on dedicated hardware, or a virtualization function instantiated on a platform (for example, a cloud platform). Optionally, the network element may be implemented by one device, or may be jointly implemented by a plurality of devices, or may be a functional module in one device. This is not specifically limited in embodiments of this application.

### (4) DN

The DN may also be referred to as a packet data network (packet data network, PDN), and is a network located outside an operator network. The DN is a service network that provides a data transmission service for the user, for example, an IP multimedia service (IP multimedia service, IMS) or the internet (Internet). An application server corresponding to a plurality of services may be deployed in the DN, to provide a plurality of possible services for the terminal device.

Specifically, data transmission may be performed between the terminal device and the application server through a user plane data transport channel. The user plane data transport channel may be established through a control plane signaling exchange procedure. The control plane signaling exchange procedure is, for example, a protocol data unit (protocol data unit, PDU) session establishment procedure. The application server may send downlink data to the terminal through the user plane data transport channel, and a transmission path of the downlink data is as follows: the application server→the UPF network element→the access network device→the terminal device. Similarly, the terminal device may send uplink data to the application server through the user plane data transport channel, and a transmission path of the uplink data is as follows: the terminal device→the access network device→the UPF network element→the application server.

In addition, it may be understood that, in FIG. 1A, Npcf, Nudm, Naf, Namf, Nsmf, and the like are service-oriented interfaces, and are used to invoke corresponding service-oriented operations; and in FIG. 1A, N1, N2, N3, N4, N6, and the like are interface sequence numbers, and in FIG. 1B, N1, N2, N3, N4, N5, N6, N7, N8, N10, N11, N25, and the like are interface sequence numbers. For meanings of these interface sequence numbers, refer to meanings of definitions in a related standard protocol.

The following first explains and describes related terms or concepts in embodiments of this application. It should be noted that these explanations are intended to make embodiments of this application easier to understand, but should not be construed as a limitation on the protection scope claimed in this application.

### (1) Communication service

In embodiments of this application, the communication service is a service implemented through a communication network architecture (for example, the communication network architecture shown in FIG. 1A or FIG. 1B). For example, the communication service may be a device-cloud collaboration service or another possible service. This is not specifically limited. The device-cloud collaboration service means that a cloud side assists a device side in completing a part of processing functions of a terminal device. A typical device-cloud collaboration service includes cloud-based photo enhancement and cloud-based game enhancement (for example, extended reality (extended reality, XR)). XR refers to various real-and-virtual combined environments and human-machine interactions that are generated by computing technologies and wearable devices, and specifically includes the following several typical forms: augmented reality (augmented reality, AR), virtual reality (virtual reality, VR), and mixed reality (mixed reality, MR).

Cloud-based photo enhancement: Generally, after a photo is locally taken through a mobile phone, the mobile phone locally performs image processing to enhance picture quality. Common image post-processing technologies include denoising, super-resolution, low-light enhancement, beautification, and the like. Some of these processing technologies require high computational power. Because the mobile phone is limited to a capability limitation when locally performing processing, processing quality is difficult to improve after reaching a specific level. Therefore, the photo may be uploaded to the cloud side for processing. A large quantity of graphics processing units (graphics processing units, GPUs) may be deployed on the cloud side to perform image processing. In this way, processing quality may be better than that of the mobile phone. In this manner, after the user takes the photo, the mobile phone needs to upload the photo to the cloud side, the cloud side processes the photo and then returns the photo to the mobile phone, and the mobile phone displays the photo to the user.

Cloud-based game enhancement: Generally, rendering effect of the mobile phone on a game is limited to a rendering computational power restriction. To obtain better rendering effect, the mobile phone may upload data of a to-be-rendered three-dimensional model and information such as a user location and a rendering angle of view to the cloud side, so that the cloud side performs rendering, and then returns a rendering result to the mobile phone. The mobile phone performs post-processing and then displays the rendering result to the user.

### (2) QoS flow

In a 5G system, a QoS flow is a finest QoS differentiation granularity in a PDU session. One PDU session may include one or more QoS flows, and each QoS flow may carry one or more communication services. A concept of the QoS flow is not limited to the QoS flow in the 5G system. In embodiments of this application, the QoS flow is a channel resource that indicates a transmission of data packets having a same QoS requirement or similar QoS requirements, and may alternatively be replaced with another name, for example, a service flow, a bearer, or a service pipe. This is not specifically limited.

In the network architecture shown in FIG. 1A or FIG. 1B, between the access network device and the core network element, the access network device and the core network element perform QoS control on a data packet of a communication service at a granularity of a QoS flow. Specifically, in a downlink data transmission process, the UPF network element determines, based on a QoS requirement of the communication service, a QoS flow corresponding to the communication service. The UPF network element maps downlink data of the communication service to the QoS flow corresponding to the communication service, to send the downlink data of the communication service to the access network device. In an uplink data transmission process, the access network device determines, based on received uplink data of the communication service from the terminal device, a QoS flow corresponding to the communication service. The access network device maps the uplink data of the communication service to the QoS flow corresponding to the communication service, to send the uplink data of the communication service to the UPF network element.

### (3) QoS parameter

A QoS flow may include a guaranteed bit rate (guaranteed bit rate, GBR) QoS flow and a non-guaranteed bit rate (non-guaranteed bit rate, Non-GBR) QoS flow. A service carried by the GBR QoS flow, for example, a service like a conversational video service, has a strict requirement on a delay or a rate, and a transmission rate of the flow needs to be guaranteed. A service carried by the non-GBR QoS flow, for example, a service like a web browsing or file downloading service, has a low requirement on a rate, and a real-time rate does not need to be guaranteed.

The GBR QoS flow is used as an example. Each GBR QoS flow may correspond to a group of QoS parameters. The group of QoS parameters may include a 5G quality of service identifier (5G QoS identifier, 5QI), a guaranteed flow bit rate (guaranteed flow bit rate, GFBR), and a maximum flow bit rate (maximum flow bit rate, MFBR).

The GFBR represents a bit rate guaranteed by a network to be provided to the QoS flow in an averaging window. The MFBR is used to limit a bit rate to a highest bit rate expected by the QoS flow (for example, a data packet may be discarded by UE, a RAN, or a UPF when the MFBR is exceeded). Values of GFBRs may be the same in an uplink (uplink, UL) and a downlink (downlink, DL), and values of MFBRs may also be the same in the UL and the DL.

The 5QI is a scalar, and is used to index a corresponding 5G QoS characteristic. 5QIs are classified into a standardized 5QI, a preconfigured 5QI, and a dynamically allocated 5QI. The standardized 5QI is in a one-to-one correspondence with a group of standardized 5G QoS characteristics. A 5G QoS characteristic value corresponding to the preconfigured 5QI may be preconfigured on an access network device. A 5G QoS characteristic corresponding to the dynamically allocated 5QI is sent by a core network device to the access network device.

The standardized 5QI is used as an example. The 5G QoS characteristics corresponding to the standardized 5QI may include the following:
(1) Resource type (resource type), including a GBR, a delay-critical (delay-critical) GBR, and a non-GBR, where the non-GBR QoS flow may use a non-GBR resource type, and the GBR QoS flow may use a GBR resource type or a delay-critical GBR resource type.
(2) Priority level (priority level), indicating a resource scheduling priority between 5G QoS flows, where the parameter is used to distinguish between QoS flows of one terminal device, or may be used to distinguish between QoS flows of different terminal devices, and a smaller value of the parameter indicates a higher priority.
(3) Packet delay budget (packet delay budget, PDB), defining a delay upper limit for a data packet transmission between the terminal device and an anchor UPF network element
(4) Packet error rate (packet error rate, PER), defining an upper limit, namely, an upper limit of a rate at which a data packet is processed by a link layer (for example, an RLC layer) of a transmit end but is not submitted to an upper layer (for example, a PDCP layer) by a corresponding receive end, where the packet error rate may also be referred to as an erroneous-packet rate or a transmission reliability, and the erroneous-packet rate and the transmission reliability may be replaced with each other. It should be noted that, for the GBR QoS flow that uses the delay-critical GBR resource type, if a volume of a data burst sent in a PDB cycle is less than a default maximum data burst volume and a flow bit rate of the QoS flow does not exceed the guaranteed flow bit rate, a data packet whose delay is greater than the PDB is denoted as a loss.
(5) Averaging window, defined for the GBR QoS flow and used by a related network element to collect statistics on the GFBR and the MFBR
(6) Maximum data burst volume (maximum data burst volume, MDBV), indicating a maximum volume of data that needs to be served by a 5G access network in one PDB cycle of the 5G access network, where each QoS flow whose resource type is the delay-critical GBR needs to be associated with one MDBV.

For example, when a value of the standardized 5QI is 82, the value corresponds to a resource type being the delay-critical GBR, a priority level being 19, a PDB being 10 milliseconds (ms), a PER being 10E-4, an MDBV being 255 bytes (bytes), and an averaging window being 2000 ms.

### (4) Protocol layer structure

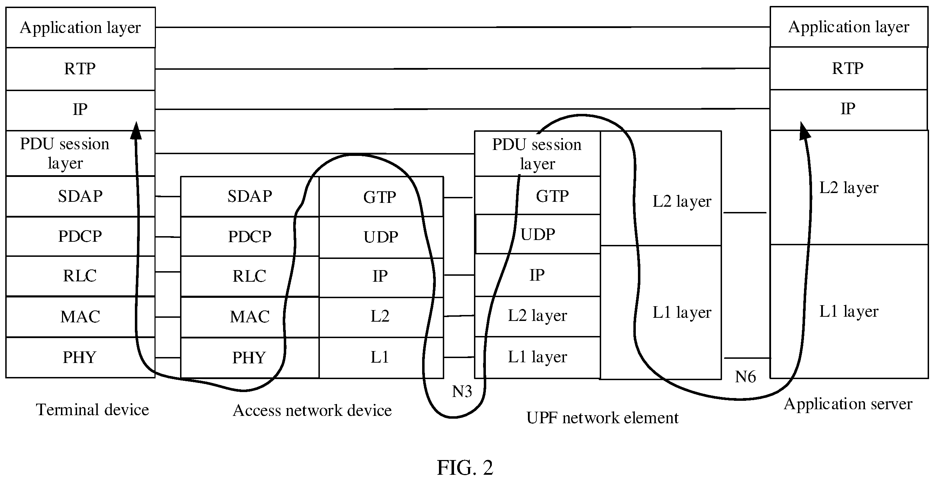

To implement data transmission, communication devices need to comply with a corresponding protocol layer structure. **FIG. 2** is an example diagram of a protocol layer structure. As shown in FIG. 2, the terminal device and the access network device may comply with an access network protocol layer structure. For descriptions of the access stratum protocol layer structure, refer to the following descriptions. A protocol layer structure between the access network device and the UPF network element may include an L1 layer (namely, a physical layer), an L2 layer (namely, a data link layer), a user datagram protocol (user datagram protocol, UDP) layer, an IP layer, a general packet radio service (general packet radio service, GPRS) tunneling protocol (GPRS tunneling protocol, GTP) layer, and the like. A protocol layer structure between the UPF network element and the application server may include an L1 layer and an L2 layer. The application server and the terminal device may further include peer application layers, transmission control protocol (transmission control protocol, TCP)/real-time transport protocol (real-time transport protocol, RTP) layers, and UDP/IP layers. The following uses an example in which the terminal device and the application server include the RTP layers and the IP layers for description.

The access network protocol layer structure between the access network device and the terminal device may include a control plane protocol layer structure and a user plane protocol layer structure. The user plane protocol structure is used as an example for illustration in FIG. 2. For example, the control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer (physical layer, PHY). The user plane protocol layer structure may include a PDCP layer, an RLC layer, a MAC layer, and a physical layer. In a possible implementation, a service data adaptation protocol (service data adaptation protocol, SDAP) layer may be further included above the PDCP layer. The SDAP layer, the PDCP layer, the RLC layer, the MAC layer, and the physical layer may also be collectively referred to as an access stratum. It can be learned from FIG. 2 that the terminal device further includes a non-access stratum, for example, a PDU session layer or an application layer. For specific descriptions of the protocol layers, refer to a related technical specification of the 3rd generation partnership project (3rd generation partnership project, 3GPP).

When the access network device and the terminal device perform user plane data transmission, data needs to pass through a user plane protocol layer, for example, pass through the SDAP layer, the PDCP layer, the RLC layer, the MAC layer, and the physical layer. For example, at least one data radio bearer (data radio bearer, DRB) is established between the access network device and the terminal device for data transmission. Each DRB may correspond to one functional entity set. For example, the functional entity set may include one PDCP layer entity, at least one RLC layer entity corresponding to the PDCP layer entity, at least one MAC layer entity corresponding to the at least one RLC layer entity, and at least one physical layer entity corresponding to the at least one MAC layer entity.

### (5) Relationship between a resource and a transmission requirement

An XR service is used as an example. The XR service has a high transmission requirement. For example, a data transmission with a transmission reliability of 10E-6 needs to be completed within 3 ms. Round-trip time (round-trip time, RTT) of a hybrid automatic repeat request (hybrid automatic repeat request, HARQ) transmission is generally greater than 3 ms. This also means that the terminal device needs to complete the data transmission with the transmission reliability of 10E-6 within one piece of HARQ transmission time. However, usually, a transmission reliability of one HARQ transmission is 10%. If the transmission fails, a retransmission is performed to ensure the transmission reliability. If the data transmission with the transmission reliability of 10E-6 is completed within one piece of HARQ transmission time, the access network device needs to perform scheduling based on a quite conservative channel condition. This also means that a modulation order corresponding to a modulation and coding scheme (modulation and coding scheme, MCS) used for the data transmission is lower, and that corresponding resource overheads are higher.

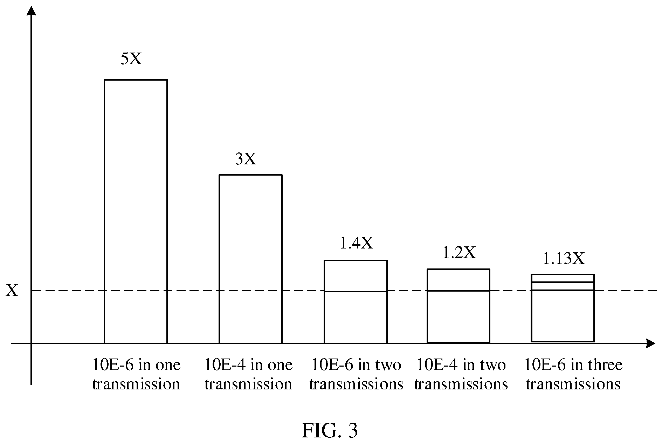

**FIG. 3** is a diagram of a relationship between a quantity of transmissions, a transmission reliability, and resource overheads. As shown in FIG. 3, on a basis of achieving a transmission reliability of 10% in a single transmission, it is assumed that a required resource is X. In this case, it is learned through analysis that a resource required for completing a transmission reliability of 10E-6 in a single transmission is 5X (that is, 5 times the resource is required for achieving the transmission reliability of 10E-6 in the single transmission); a resource required for completing a transmission reliability of 10E-4 in a single transmission is 3X; a resource required for completing a transmission reliability of 10E-6 in two transmissions (where a transmission reliability of 10% is completed in one transmission, and a transmission reliability of 10E-5 is completed in the other transmission) is 1.4X; a resource required for completing a transmission reliability of 10E-4 in two transmissions is 1.2X; and a resource required for completing a transmission reliability of 10E-6 in three transmissions is 1.13X. Therefore, it can be learned that required resource overheads can be greatly reduced by appropriately relaxing requirements on the transmission reliability and a delay.

In a 5G communication system, a PCF network element is responsible for generating a QoS flow control policy, and an SMF network element is responsible for QoS configuration. For example, after receiving a PDU session establishment request message or a PDU session modification request message from a terminal device, if the SMF network element determines, based on a data packet characteristic (for example, an IP address or a port number) of a to-be-transmitted communication service, that a new QoS flow needs to be established for the terminal device, the SMF network element sends QoS description information of the QoS flow to an access network device through an AMF network element. The QoS description information includes values of a plurality of QoS parameters of the QoS flow. Then, the access network device may configure a mapping relationship between the QoS flow and a DRB based on the values of the plurality of QoS parameters, and transmit a data packet in the QoS flow based on the values of the plurality of QoS parameters.

The QoS description information may also be referred to as a QoS profile (QoS profile) or a QoS parameter set. The values of the plurality of QoS parameters of the QoS flow are related to a service requirement of the communication service carried by the QoS flow. For example, for an entry-level VR service, a transmission rate is 50 Mbps, a transmission delay is 20 ms, and a transmission reliability is 10E-4; for an advanced VR service, a transmission rate is 150 Mbps, a transmission delay is 8 ms, and a transmission reliability is 10E-5; and for a fully immersive VR service, a transmission rate is 500 Mbps, a transmission delay is 3 ms, and a transmission reliability is 10E-6.

In the foregoing manner, after the SMF network element sends the QoS description information of the QoS flow to the access network device, the access network device needs to transmit the data packet based on transmission requirements corresponding to the values of the plurality of QoS parameters in the QoS description information. If a value of one or more QoS parameters needs to be changed because transmission requirements corresponding to values of some QoS parameters cannot be met, the SMF network element needs to perform QoS configuration again. For example, the QoS description information configured by the SMF network element for the access network device is as follows: A transmission rate is 500 Mbps, a transmission delay is 3 ms, and a transmission reliability is 10E-6 (which corresponds to the fully immersive VR service). Because the fully immersive VR service has a high transmission requirement, when resources of the access network device are insufficient or a channel of the terminal device deteriorates, the transmission requirement may not be met. In this case, if the SMF network element performs QoS configuration again to reduce a service guarantee level, a core network, an application server, and the terminal device need to be notified in an end-to-end manner to update QoS. This process requires a high delay, and consequently, different transmission conditions cannot be quickly adapted to, affecting user experience.

In view of this, embodiments of this application provide a communication method, to configure a first value and a second value of each of M QoS parameters for an access network device, so that the access network device can quickly adjust a transmission requirement corresponding to a QoS flow, to quickly adapt to different transmission conditions.

With reference to specific embodiments, the following describes in detail the communication method provided in embodiments of this application. Unless otherwise specified, a "terminal device" may be the terminal device itself, or may be a component, for example, a chip or a chip system, in the terminal device; the "access network device" may be the access network device itself, or may be a component, for example, a chip or a chip system, in the access network device; and a "core network device" may be the core network device itself, or may be a component, for example, a chip or a chip system, in the core network device.

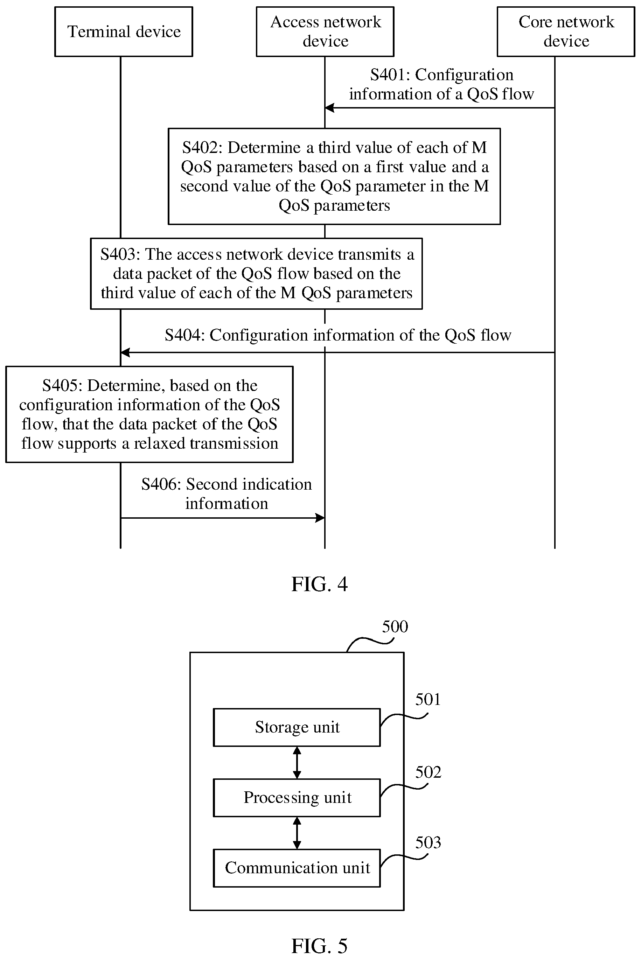

**FIG. 4** is a schematic flowchart corresponding to a communication method according to an embodiment of this application. As shown in FIG. 4, the method includes the following steps.

**S401:** A core network device sends configuration information of a QoS flow to an access network device, and correspondingly, the access network device receives the configuration information of the QoS flow.

For example, the QoS flow corresponds to a plurality of QoS parameters. For example, the plurality of QoS parameters include at least one of a transmission delay (for example, a PDB), a transmission reliability (for example, a PER), and a transmission rate (for example, a GFBR). Optionally, the plurality of QoS parameters further include another possible QoS parameter. For details, refer to the foregoing descriptions. This is not limited in embodiments of this application.

The core network device may be an SMF network element. For example, the QoS flow is used to carry a VR service. The SMF network element may receive a policy and charging control (policy and charging control, PCC) rule of the VR service sent by a PCF network element, and then determine the configuration information of the QoS flow according to the PCC rule of the VR service. The PCC rule of the VR service may be obtained by the PCF network element based on service requirement information of the VR service.
**(1)** Content included in the configuration information of the QoS flow is described.

The configuration information of the QoS flow includes a first value and a second value of each of M QoS parameters, where M is a positive integer. The M QoS parameters may include the transmission delay and/or the transmission reliability, and may further include another possible QoS parameter, for example, the transmission rate. In this embodiment of this application, an example in which "the M QoS parameters include the transmission delay and the transmission reliability" is used for description.

For an i^{th} QoS parameter in the M QoS parameters, a first value and a second value of the i^{th} QoS parameter correspond to different transmission requirements, where i=1, 2, ..., M. A transmission requirement corresponding to the first value of the i^{th} QoS parameter is higher than a transmission requirement corresponding to the second value of the i^{th} QoS parameter. The transmission requirement corresponding to the first value of the i^{th} QoS parameter may be referred to as a basic transmission requirement. The transmission requirement corresponding to the second value of the i^{th} QoS parameter may be referred to as a relaxed transmission requirement. For example, the i^{th} QoS parameter is the transmission delay, a first value of the transmission delay is 3 ms, and a second value of the transmission delay is 10 ms; or the i^{th} QoS parameter is the transmission reliability, a first value of the transmission reliability is 10E-6, and a second value of the transmission reliability is 10E-4.

A smaller value of the transmission delay indicates a higher corresponding transmission requirement. For example, if the first value of the transmission delay is 3 ms, a corresponding transmission requirement is that the transmission delay is less than or equal to 3 ms; and if the second value of the transmission delay is 10 ms, a corresponding transmission requirement is that the transmission delay is less than or equal to 10 ms. A smaller value of the transmission reliability indicates a higher corresponding transmission requirement. For example, if the first value of the transmission reliability is 10E-6, a corresponding transmission requirement is that the transmission reliability is not less than 10E-6; and if the second value of the transmission reliability is 10E-4, a corresponding transmission requirement is that the transmission reliability is not less than 10E-4. It may be understood that the transmission requirement may alternatively be replaced with a QoS demand, a QoS requirement, or another possible description.

Optionally, the configuration information of the QoS flow further includes a first value of each of N QoS parameters. None of the N QoS parameters has a second value, and the N QoS parameters are different from the M QoS parameters. For example, the N QoS parameters include a transmission rate, and a first value of the transmission rate is 500 Mbps. In this case, the M QoS transmission parameters do not include the transmission rate.

**(2)** Representation forms of the configuration information of the QoS flow are described.

In this embodiment of this application, there may be a plurality of representation forms of the configuration information of the QoS flow. The following uses an example in which "the configuration information of the QoS flow includes the first value and the second value of each of the M QoS parameters and the first value of each of the N QoS parameters" to describe two possible implementations.

### (2.1) Implementation 1

The configuration information of the QoS flow includes a first QoS profile, and the first QoS profile includes the first value and the second value of each of the M QoS parameters, and further includes the first value of each of the N QoS parameters. Table 1 shows an example of the configuration information of the QoS flow.

**Table 1: Example of the configuration information of the QoS flow**

| | | Transmission rate | Transmission delay | Transmission reliability |
|---|---|---|---|---|
| First QoS profile | Basic transmission requirement | 500 Mbps | 3 ms | 10E-6 |
| | Relaxed transmission requirement | | 10 ms | 10E-4 |

In Table 1, the QoS flow corresponds to one QoS profile (namely, the first QoS profile), and the first QoS profile includes a first value (namely, a basic transmission requirement) of each of W (W=M+N) QoS parameters, and further includes a second value (namely, a relaxed transmission requirement) of each of the M QoS parameters. In a configuration shown in Table 1, M=2, and N=1.

It may be understood that Table 1 is merely a possible example, and the configuration information of the QoS flow may alternatively be in another form. For example, the configuration information of the QoS flow includes {500 Mbps, 3 ms, 10 ms, 10E-6, 10E-4}, or {500 Mbps, (3 ms, 10 ms), (10E-6, 10E-4)}, or {500 Mbps}, {3 ms, 10 ms}, and {10E-6, 10E-4}, or {500 Mbps, 3 ms, 10E-6} and {10 ms, 10E-4}.

In addition, Table 1 is described by using an example in which the QoS flow may correspond to one QoS profile. In another example, the QoS flow may alternatively correspond to a plurality of QoS profiles (for example, a QoS profile 1 and a QoS profile 2). Table 2 shows another example of the configuration information of the QoS flow.

**Table 2: Example of the configuration information of the QoS flow**

| | | Transmission rate | Transmission delay | Transmission reliability |
|---|---|---|---|---|
| QoS profile 1 | Basic transmission requirement | 500 Mbps | 3 ms | 10E-6 |
| | Relaxed transmission requirement | | 10 ms | 10E-4 |
| QoS profile 2 | Basic transmission requirement | 150 Mbps | 8 ms | 10E-5 |
| | Relaxed transmission requirement | | 20 ms | 10E-3 |

In Table 2, content included in the QoS profile 1 and content included in the QoS profile 2 differ only in values. In another example, the QoS profile 2 may alternatively include only a first value (namely, a basic transmission requirement) of each of W QoS parameters, that is, none of the W QoS parameters has a second value. This is not specifically limited.

### (2.2) Implementation 2

The configuration information of the QoS flow includes a second QoS profile and a third QoS profile. The second QoS profile includes the first value of each of the M QoS parameters, and further includes the first value of each of the N QoS parameters. The third QoS profile includes the second value of each of the M QoS parameters, and further includes the first value of each of the N QoS parameters. Optionally, the second QoS profile and the third QoS profile belong to a same QoS profile group. Table 3 shows an example of the configuration information of the QoS flow. In a configuration shown in Table 3, M=2, and N=1.

**Table 3: Example of the configuration information of the QoS flow**

| | Transmission rate | Transmission delay | Transmission reliability | |
|---|---|---|---|---|
| Second QoS profile | 500 Mbps | 3 ms | 10E-6 | QoS profile group 1 |
| Third QoS profile | 500 Mbps | 10 ms | 10E-4 | |

It may be understood that Table 3 is merely a possible example, and the configuration information of the QoS flow may alternatively be in another form. For example, the configuration information of the QoS flow includes {(second QoS profile: 500 Mbps, 3 ms, 10E-6) and (third QoS profile: 500 Mbps, 10 ms, 10E-4)}.

In addition, Table 3 is described by using an example in which the QoS flow may correspond to two QoS profiles. In another example, the QoS flow may alternatively correspond to more QoS profiles (for example, a QoS profile 3, a QoS profile 4, a QoS profile 5, and a QoS profile 6). Table 4 shows another example of the configuration information of the QoS flow.

**Table 4: Example of the configuration information of the QoS flow**

| | Transmission rate | Transmission delay | Transmission reliability | |
|---|---|---|---|---|
| QoS profile 3 | 500 Mbps | 3 ms | 10E-6 | QoS profile group 2 |
| QoS profile 4 | 500 Mbps | 10 ms | 10E-4 | |
| QoS profile 5 | 150 Mbps | 8 ms | 10E-5 | QoS profile group 3 |
| QoS profile 6 | 150 Mbps | 20 ms | 10E-3 | |

In Table 4, the QoS profile 3 and the QoS profile 4 correspond to a group of basic transmission requirements and relaxed transmission requirements, that is, the QoS profile 3 and the QoS profile 4 belong to one QoS profile group; and the QoS profile 5 and the QoS profile 6 correspond to a group of basic transmission requirements and relaxed transmission requirements, that is, the QoS profile 5 and the QoS profile 6 belong to one QoS profile group. In another example, the configuration information of the QoS flow may alternatively include the QoS profile 3, the QoS profile 4, and the QoS profile 5, and does not include the QoS profile 6. This is not specifically limited.

For Implementation 1 and Implementation 2, the following uses the cases shown in Table 1 and Table 3 as examples for description in this embodiment of this application. When the configuration information of the QoS flow includes the QoS profile 1 and the QoS profile 2 (as shown in Table 2), the access network device may select one of the QoS profiles, for example, the QoS profile 1, and perform S402 and S403 based on the QoS profile 1. Optionally, the access network device may further send, to the core network device, an identifier of the QoS profile selected by the access network device. When the configuration information of the QoS flow includes the QoS profile 3 to the QoS profile 6 (as shown in Table 4), the access network device may select one of the QoS profile groups, for example, the QoS profile group 2, and perform S402 and S403 based on the QoS profile 3 and the QoS profile 4. Optionally, the access network device may further send, to the core network device, identifiers of the QoS profiles or an identifier of the QoS profile group selected by the access network device.

**S402:** The access network device determines a third value of each of the M QoS parameters based on the first value and the second value of the QoS parameter in the M QoS parameters.

Herein, the access network device may flexibly determine the third value of each QoS parameter based on the first value and the second value of the QoS parameter in the M QoS parameters. For example, the access network device determines the third value of each QoS parameter based on a load status and/or a channel status of the access network device. Specifically, the access network device may determine a specific transmission requirement for each data packet or all data packets in each transmission time period. For example, the access network device may transmit the data packet in the QoS flow based on the basic transmission requirements (each QoS parameter is set to the first value) as much as possible, and when the basic transmission requirements cannot be met, may perform a relaxed transmission on the data packet in the QoS flow, that is, transmit the data packet in the QoS flow based on transmission requirements lower than the basic transmission requirements (a transmission requirement corresponding to a first value of at least one QoS parameter is not met).

A transmission requirement corresponding to the third value of each of the M QoS parameters is lower than or equal to a transmission requirement corresponding to the first value of the QoS parameter, and higher than or equal to a transmission requirement corresponding to the second value of the QoS parameter. For example, the M QoS parameters include the transmission delay and the transmission reliability. If the first value of the transmission delay is 3 ms, and the second value of the transmission delay is 10 ms, then a third value of the transmission delay may be greater than or equal to 3 ms and less than or equal to 10 ms. If the first value of the transmission reliability is 10E-6, and the second value of the transmission reliability is 10E-4, then a third value of the transmission reliability may be greater than or equal to 3 ms and less than or equal to 10 ms.

S402 is an optional step. For example, the access network device may not perform S402, but transmits the data packet in the QoS flow based on the first value and the second value of each of the M QoS parameters, where the third value of the QoS parameter used to transmit the data packet in the QoS flow is between the first value and the second value.

**S403:** The access network device transmits the data packet in the QoS flow based on the third value of each of the M QoS parameters.

For example, the access network device may use the third value of each of the M QoS parameters as a minimum guaranteed target in a current transmission. For example, if the third value of the transmission delay is 8 ms, the access network device transmits the data packet in the QoS flow based on a resource required by a guaranteed target that the transmission delay is 8 ms, to ensure that the transmission delay is not greater than 8 ms.

If the configuration information of the QoS flow further includes the first value of each of the N QoS parameters, the access network device may transmit the data packet in the QoS flow based on the third value of each of the M QoS parameters and the first value of each of the N QoS parameters. That the access network device transmits the data packet in the QoS flow may mean that the access network device sends the data packet in the QoS flow to a terminal device (that is, performs downlink transmission) or the access network device schedules the terminal device to send the data packet in the QoS flow (that is, performs uplink transmission).

The configuration information of the QoS flow shown in Table 1 is used as an example. At a time point T1, if the access network device determines that a current resource supports a transmission of the data packet in the QoS flow based on the basic transmission requirements, the access network device may determine that the third value of the transmission delay is 3 ms and the third value of the transmission reliability is 10E-6, and transmit the data packet in the QoS flow based on the third value (3 ms) of the transmission delay, the third value (10E-6) of the transmission reliability, and the first value (500 Mbps) of the transmission rate. In other words, when the data packet is transmitted, the transmission delay is less than or equal to 3 ms, the transmission reliability is not less than 10E-6, and the transmission rate is greater than or equal to 500 Mbps.

After a period of time, at a time point T2, if the access network device determines that the current resource cannot support the transmission of the data packet in the QoS flow based on the basic transmission requirements (for example, because resources of the access network device are insufficient or a channel of the terminal device deteriorates, the current resource cannot support the transmission of the data packet in the QoS flow based on the basic transmission requirements), the access network device may perform the relaxed transmission, that is, relax a transmission requirement corresponding to the transmission delay and/or a transmission requirement corresponding to the transmission reliability, to quickly adjust a transmission requirement corresponding to the QoS flow, so as to quickly adapt to different transmission conditions.

For example, the access network device updates the third value of the transmission delay to 8 ms (to perform a HARQ retransmission and ensure the transmission reliability of 10E-6 through two transmissions), and then the access network device may transmit the data packet in the QoS flow based on the third value (8 ms) of the transmission delay, the third value (10E-6) of the transmission reliability, and the first value (500 Mbps) of the transmission rate. In other words, when the data packet is transmitted, the transmission delay is less than or equal to 8 ms, the transmission reliability is not less than (10E-6), and the transmission rate is greater than or equal to 500 Mbps. For another example, the access network device updates the third value of the transmission reliability to 10E-4, and then the access network device may transmit the data packet in the QoS flow based on the third value (3 ms) of the transmission delay, the third value (10E-4) of the transmission reliability, and the first value (500 Mbps) of the transmission rate. For another example, the access network device updates the third value of the transmission delay to 8 ms, and updates the third value of the transmission reliability to 10E-4, and then the access network device may transmit the data packet in the QoS flow based on the third value (8 ms) of the transmission delay, the third value (10E-4) of the transmission reliability, and the first value (500 Mbps) of the transmission rate.

Optionally, the foregoing method further includes the following steps.

**S404:** The core network device sends the configuration information of the QoS flow to the terminal device, and correspondingly, the terminal device receives the configuration information of the QoS flow.

For example, the core network device may send the configuration information of the QoS flow to the terminal device through a PDU session-related message or a UE context-related message. The core network device may send the configuration information of the QoS flow to the terminal device before or after sending the configuration information of the QoS flow to the access network device. An execution sequence is not limited in embodiments of this application.

**S405:** The terminal device determines, based on the configuration information of the QoS flow, that the data packet in the QoS flow supports the relaxed transmission.

Herein, because the configuration information of the QoS flow includes the first value and the second value of each of the M QoS parameters, the terminal device may determine, based on the configuration information of the QoS flow, that the data packet in the QoS flow supports the relaxed transmission.

**S406:** The terminal device sends second indication information to the access network device, where the second indication information indicates a recommended third value of at least one of the M QoS parameters. Specifically, the terminal device may determine, based on service experience awareness information of a user, whether a relaxed transmission manner of the QoS flow needs to be adjusted, and send the second indication information to the access network device if the terminal device determines that the relaxed transmission manner needs to be adjusted. For example, service experience may be classified into a plurality of different levels, for example, four levels: an excellent level, a good level, an average level, and a poor level. Correspondingly, the service experience awareness information indicates a level of service experience of the user in the excellent level, the good level, the average level, and the poor level. A specific manner in which the terminal device obtains the service experience awareness information is not limited in embodiments of this application. For example, the access network device transmits the data packet in the QoS flow based on the third value (8 ms) of the transmission delay, the third value (10E-6) of the transmission reliability, and the first value (500 Mbps) of the transmission rate. If an application layer of the terminal device determines that the level of the service experience of the user is low (for example, the level is the average or poor level), the application layer may transfer the service experience awareness information to an access stratum of the terminal device, and then the access stratum of the terminal device may send the second indication information to the access network device. For example, the second indication information indicates that a recommended third value of the transmission delay is 3 ms and a recommended third value of the transmission reliability is 10E-4. After receiving the second indication information, the access network device may adjust the third value of the corresponding QoS parameter based on the second indication information.

In addition, for Table 2 in Implementation 1, the second indication information further indicates a recommended QoS profile. For example, the access network device selects the QoS profile 1, and transmits the data packet in the QoS flow based on the third value (8 ms) of the transmission delay, the third value (10E-6) of the transmission reliability, and the first value (500 Mbps) of the transmission rate. In this case, the terminal device may send the second indication information to the access network device, where the second indication information indicates that the recommended QoS profile is the QoS profile 2, the recommended third value of the transmission delay is 12 ms, and the recommended third value of the transmission reliability is 10E-5.

For Table 4 in Implementation 2, the second indication information further indicates a recommended QoS profile group. For example, the access network device selects the QoS profile group 2, and transmits the data packet in the QoS flow based on the third value (8 ms) of the transmission delay, the third value (10E-6) of the transmission reliability, and the first value (500 Mbps) of the transmission rate. In this case, the terminal device may send the second indication information to the access network device, where the second indication information indicates that the recommended QoS profile is the QoS profile group 3, the recommended third value of the transmission delay is 12 ms, and the recommended third value of the transmission reliability is 10E-5.

The following may be understood: (1) Because the configuration information of the QoS flow includes the first value and the second value of each of the M QoS parameters, that is, the data packet in the QoS flow supports the relaxed transmission, when the third value of the at least one of the M QoS parameters changes, the access network device does not need to notify the core network device. For example, at the time point T2 in the foregoing example, the access network device updates the third value of the transmission delay from 3 ms to 8 ms, that is, the third value of the transmission delay changes. However, because the transmission rate does not change, the application layer of the terminal device and an application layer of an application server do not need to perform corresponding adjustment (for example, do not need to adjust used resolution and a used frame rate). Then, the access network device does not need to notify the core network device, and the core network device does not need to notify the terminal device and the application server.

In a possible implementation, the configuration information of the QoS flow includes the first indication information, and the first indication information explicitly indicates that, when the third value of the at least one of the M QoS parameters changes, the core network device does not need to be notified. Then, the access network device may learn, based on the first indication information, that the core network device is not notified when the third value of the at least one of the M QoS parameters changes. For example, for Implementation 2, the first indication information is associated with the second QoS profile and the third QoS profile. In this case, the first indication information indicates that, when the QoS profile used by the access network device is switched between the second QoS profile and the third QoS profile, the core network device does not need to be notified.

In another possible implementation, the configuration information of the QoS flow may implicitly indicate that, when the third value of the at least one of the M QoS parameters changes, the core network device does not need to be notified. For example, the first value and the second value of each of the M QoS parameters may be included in a same QoS profile, as described in Implementation 1. Therefore, after receiving the configuration information of the QoS flow, the access network device may learn that the core network device is not notified when the third value of the at least one of the M QoS parameters changes.

For another example, the first value and the second value of each of the M QoS parameters are included in different QoS profiles. For example, the first value of each of the M QoS parameters is included in the second QoS profile, and the second value of each of the M QoS parameters is included in the third QoS profile, as described in Implementation 2. Further, if the core network device configures the second QoS profile and the third QoS profile to belong to a same QoS profile group, after receiving the configuration information of the QoS flow, the access network device may learn that the core network device is not notified when the third value of the at least one of the M QoS parameters changes; or if values of the transmission rate in the second QoS profile and the third QoS profile are the same, after receiving the configuration information of the QoS flow, the access network device may learn that the core network device is not notified when the third value of the at least one of the M QoS parameters changes.

In addition, in the case shown in Table 2 in Implementation 1, when the QoS profile used by the access network device is switched between the QoS profile 1 and the QoS profile 2, the access network device may notify the core network device. Further, the core network device may notify the terminal device and the application server, so that the application layer of the terminal device and the application layer of the application server perform corresponding adjustment. Alternatively, in the case shown in Table 4 in Implementation 2, when the QoS profile group used by the access network device is switched between different QoS profile groups, the access network device may notify the core network device. Further, the core network device may notify the terminal device and the application server, so that the application layer of the terminal device and the application layer of the application server perform corresponding adjustment.

(2) Because the data packet in the QoS flow supports the relaxed transmission, the data packet in the QoS flow may include a first data packet and a second data packet. The first data packet is a data packet transmitted based on basic transmission requirements. For example, a transmission metric (for example, a transmission delay) of the first data packet meets the transmission requirement corresponding to the first value of each of the M QoS parameters. The second data packet may be a data packet other than the first data packet in the QoS flow, and the second data packet is a data packet for the relaxed transmission. For example, a transmission metric of the second data packet meets the transmission requirement corresponding to the third value of each of the M QoS parameters, and there is the at least one QoS parameter in the M QoS parameters, where a transmission requirement corresponding to the third value of the QoS parameter is lower than a transmission requirement corresponding to a first value of the QoS parameter.

In this embodiment of this application, the access network device may control, based on a first threshold and/or a second threshold, a proportion of data packets for the relaxed transmission and/or a proportion of data packets not for the relaxed transmission in the QoS flow. For example, the proportion of the data packets for the relaxed transmission is less than or equal to the first threshold, that is, a ratio (referred to as a second ratio) of a quantity of second data packets to a total quantity of data packets in the QoS flow is less than or equal to the first threshold, to avoid impact on user experience due to an excessive quantity of data packets for the relaxed transmission. For another example, the proportion of the data packets not for the relaxed transmission is greater than the second threshold, that is, a ratio (referred to as a first ratio) of a quantity of first data packets to the total quantity of data packets in the QoS flow is greater than the second threshold. A sum of the first threshold and the second threshold is equal to 1. The first threshold and/or the second threshold may be included in the configuration information of the QoS flow, or the first threshold and/or the second threshold may be preconfigured.

(3) The access network device may collect statistics on the first ratio and/or the second ratio, and send the first ratio and/or the second ratio to the core network device, so that the core network device performs charging based on the first ratio and/or the second ratio.

(4) The access network device may send, to the terminal device, configuration information of a DRB corresponding to the QoS flow, where the configuration information of the DRB is determined based on the second value of each of the M QoS parameters. For example, the access network device may send an RRC reconfiguration message to the terminal device, where the RRC reconfiguration message includes the configuration information of the DRB.

For example, the configuration information of the DRB includes duration of a discard timer corresponding to the data packet in the QoS flow. The duration of the discard timer may be determined based on the second value of the transmission delay. For example, the duration of the discard timer is equal to the second value of the transmission delay, where the discard timer may be a timer set at a PDCP layer. A reason is as follows: The uplink transmission is used as an example; after receiving the data packet from the QoS flow, the PDCP layer of the terminal device may start the discard timer, and if the PDCP layer of the terminal device still does not transmit the data packet to a lower layer after the discard timer expires, the PDCP layer of the terminal device may discard the data packet; and if the duration of the discard timer is equal to the first value (3 ms) of the transmission delay, when a transmission delay determined by the access network device is 8 ms, when the access network device schedules the PDCP layer of the terminal device to transmit the data packet, the PDCP layer of the terminal device may have discarded the data packet, and consequently, the transmission fails. Therefore, the duration of the discard timer is configured to be equal to the second value of the transmission delay, so that the access network device flexibly adjusts the transmission delay to transmit the data packet in the QoS flow.

For embodiments of this application, the foregoing focuses on a difference between different implementations or different examples. For other content than the difference, reference may be made between the different implementations or the different examples. In addition, the different implementations or the different examples may be partially implemented, or may be combined for implementation, or may be partially combined for implementation, or the like. Details are not enumerated one by one in embodiments of this application. The step numbers in the flowcharts described in the foregoing embodiments are merely an example of an execution procedure, and do not constitute a limitation on an execution sequence of the steps. In embodiments of this application, there may be no strict execution sequence between steps that do not have a time sequence dependency relationship with each other. In addition, not all the steps shown in each flowchart are steps that need to be performed. A part of steps may be added or deleted based on each flowchart and an actual requirement, or only a part of the steps included in the foregoing flowchart may be performed.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the access network device, the core network device, and the terminal device may be divided into functional units based on the method examples. For example, each functional unit may be obtained through division based on each corresponding function, or two or more functions may be integrated into one unit. The integrated unit may be implemented in a form of hardware, or may be implemented in a form of a software functional unit.

When an integrated unit is used, FIG. 5 is a possible example block diagram of an apparatus according to an embodiment of this application. As shown in FIG. 5, the apparatus 500 may include a processing unit 502 and a communication unit 503. The processing unit 502 is configured to: control and manage actions of the apparatus 500. The communication unit 503 is configured to support the apparatus 500 in communicating with another device. Optionally, the communication unit 503 is also referred to as a transceiver unit, and may include a receiving unit and/or a sending unit, which are respectively configured to perform a receiving operation and a sending operation. The apparatus 500 may further include a storage unit 501, configured to store program code and/or data of the apparatus 500.
(1) The apparatus 500 may be the access network device in the foregoing embodiments. The processing unit 502 may support the apparatus 500 in performing actions of the access network device in the foregoing method examples. Alternatively, the processing unit 502 mainly performs internal actions of the access network device in the method examples, and the communication unit 503 may support the apparatus 500 in communicating with another device.

In an embodiment, the communication unit 503 is configured to receive configuration information of a quality of service QoS flow from a core network device, where the configuration information of the QoS flow includes a first value and a second value of each of M QoS parameters. The processing unit 502 is configured to determine a third value of each of the M QoS parameters based on the first value and the second value of the QoS parameter in the M QoS parameters. The communication unit 503 is further configured to transmit a data packet in the QoS flow based on the third value of each of the M QoS parameters, where a transmission requirement corresponding to the third value of each of the M QoS parameters is lower than or equal to a transmission requirement corresponding to the first value of the QoS parameter, and higher than or equal to a transmission requirement corresponding to the second value of the QoS parameter.

In a possible design, the configuration information of the QoS flow includes first indication information, and the first indication information indicates that, when a third value of at least one of the M QoS parameters changes, the core network device does not need to be notified.

In a possible design, the communication unit 503 is further configured to transmit the data packet in the QoS flow based on the third value of each of the M QoS parameters and a first value of each of N QoS parameters.

In a possible design, the configuration information of the QoS flow includes first QoS description information, and the first QoS description information includes the first value and the second value of each of the M QoS parameters; or the configuration information of the QoS flow includes second QoS description information and third QoS description information, the second QoS description information includes the first value of each of the M QoS parameters, and the second QoS description information includes the second value of each of the M QoS parameters.

In a possible design, the QoS flow includes a first data packet and a second data packet, a transmission metric of the first data packet meets the transmission requirement corresponding to the first value of each of the M QoS parameters, and the second data packet is a data packet other than the first data packet in the QoS flow; and a ratio of a quantity of second data packets to a total quantity of data packets in the QoS flow is less than or equal to a threshold.

In a possible design, the threshold is included in the configuration information of the QoS flow, or the threshold is preconfigured.

In a possible design, the QoS flow includes the first data packet and the second data packet, the transmission metric of the first data packet meets the transmission requirement corresponding to the first value of each of the M QoS parameters, and the second data packet is a data packet other than the first data packet in the QoS flow. The processing unit 502 is configured to determine a first ratio of a quantity of first data packets to the total quantity of data packets in the QoS flow, and/or a second ratio of the quantity of second data packets to the total quantity of data packets in the QoS flow. The communication unit 503 is further configured to send the first ratio and/or the second ratio to the core network device.

In a possible design, the communication unit 503 is further configured to send, to a terminal device, configuration information of a data radio bearer DRB corresponding to the QoS flow, where the configuration information of the DRB is determined based on the second value of each of the M QoS parameters.

In a possible design, the configuration information of the DRB includes duration of a discard timer corresponding to the data packet in the QoS flow.

In a possible design, the communication unit 503 is further configured to receive second indication information from the terminal device, where the second indication information indicates a recommended third value of each of the M QoS parameters.

In a possible design, the M QoS parameters include at least one of the following: a transmission delay, a transmission reliability, and a transmission rate.

(2) The apparatus 500 may be the core network device in the foregoing embodiments. The processing unit 502 may support the apparatus 500 in performing actions of the core network device in the foregoing method examples. Alternatively, the processing unit 502 mainly performs internal actions of the core network device in the method examples, and the communication unit 503 may support the apparatus 500 in communicating with another device.

In an embodiment, the processing unit 502 is configured to determine configuration information of a QoS flow, where the configuration information of the QoS flow includes a first value and a second value of each of M QoS parameters, the first value and the second value of each of the M QoS parameters are used to determine a third value of the QoS parameter, and the third value of each of the M QoS parameters is used to transmit a data packet in the QoS flow. The communication unit 503 is configured to send the configuration information of the QoS flow to an access network device and/or a terminal device, where a transmission requirement corresponding to the third value of each of the M QoS parameters is lower than or equal to a transmission requirement corresponding to the first value of the QoS parameter, and higher than or equal to a transmission requirement corresponding to the second value of the QoS parameter.

In a possible design, the configuration information of the QoS flow includes first indication information, and the first indication information indicates that, when a third value of at least one of the M QoS parameters changes, the core network device does not need to be notified.

In a possible design, the configuration information of the QoS flow includes first QoS description information, and the first QoS description information includes the first value and the second value of each of the M QoS parameters; or the configuration information of the QoS flow includes second QoS description information and third QoS description information, the second QoS description information includes the first value of each of the M QoS parameters, and the second QoS description information includes the second value of each of the M QoS parameters.

In a possible design, the QoS flow includes a first data packet and a second data packet, a transmission metric of the first data packet meets the transmission requirement corresponding to the first value of each of the M QoS parameters, and the second data packet is a data packet other than the first data packet in the QoS flow; and the configuration information of the QoS flow includes a threshold, and a ratio of a quantity of second data packets to a total quantity of data packets in the QoS flow is less than or equal to the threshold.

In a possible design, the QoS flow includes the first data packet and the second data packet, the transmission metric of the first data packet meets the transmission requirement corresponding to the first value of each of the M QoS parameters, and the second data packet is a data packet other than the first data packet in the QoS flow. The communication unit 503 is further configured to receive a first ratio of a quantity of first data packets to the total quantity of data packets in the QoS flow, and/or a second ratio of the quantity of second data packets to the total quantity of data packets in the QoS flow.

(3) The apparatus 500 may be the terminal device in the foregoing embodiments. The processing unit 502 may support the apparatus 500 in performing actions of the terminal device in the foregoing method examples. Alternatively, the processing unit 502 mainly performs internal actions of the terminal device in the method examples, and the communication unit 503 may support the apparatus 500 in communicating with another device.

In an embodiment, the communication unit 503 is configured to receive configuration information of a QoS flow from a core network device, where the configuration information of the QoS flow includes a first value and a second value of each of M QoS parameters. The processing unit 502 is configured to determine, based on the configuration information of the QoS flow, that a data packet in the QoS flow supports a relaxed transmission.

In a possible design, the communication unit 503 is further configured to send second indication information to an access network device, where the second indication information indicates a recommended third value of at least one of the M QoS parameters.

In a possible design, the communication unit 503 is further configured to receive configuration information of a data radio bearer DRB corresponding to the QoS flow, where the configuration information of the DRB is determined based on the second value of each of the M QoS parameters.

In a possible design, the configuration information of the DRB includes duration of a discard timer corresponding to the data packet in the QoS flow.

It should be understood that division into the units in the foregoing apparatus is merely logical function division. During actual implementation, all or a part of the units may be integrated into one physical entity, or may be physically separated. In addition, all the units in the apparatus may be implemented in a form of invoking software by a processing element or may be implemented in a form of hardware, or a part of the units may be implemented in a form of invoking software by a processing element, and a part of the units may be implemented in a form of hardware. For example, each unit may be a separately disposed processing element, or may be integrated into a chip of the apparatus for implementation. In addition, each unit may alternatively be stored in a memory in a form of a program and a processing element of the apparatus invokes the unit and performs a function of the unit. In addition, all or a part of these units may be integrated, or may be independently implemented. The processing element herein may also be referred to as a processor, and may be an integrated circuit having a signal processing capability. In an implementation process, the operations in the foregoing methods or the foregoing units may be implemented through a hardware integrated logic circuit in the processor element or may be implemented in a form of invoking software by the processing element.

In an example, a unit in any one of the foregoing apparatuses may be one or more integrated circuits configured to implement the foregoing method, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these forms of integrated circuits. For another example, when the unit in the apparatus may be implemented in a form of invoking the program by the processing element, the processing element may be a processor, for example, a general-purpose central processing unit (central processing unit, CPU) or another processor that can invoke the program. For another example, these units may be integrated, and implemented in a form of a system-on-a-chip (system-on-a-chip, SOC).

The foregoing unit used for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit used for sending is an interface circuit of the apparatus, and is configured to send a signal to another apparatus. For example, when the apparatus is implemented in the form of the chip, the sending unit is an interface circuit that is of the chip and that is configured to send a signal to another chip or apparatus.

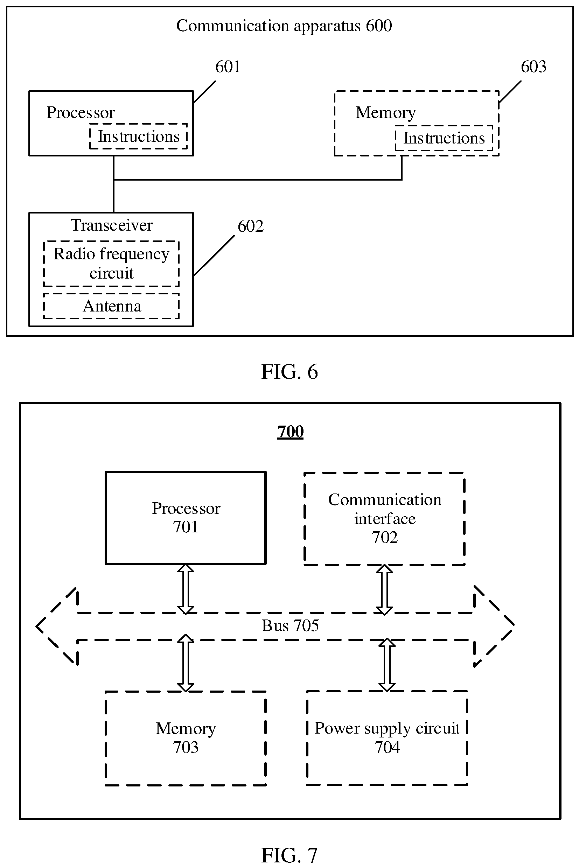

In another possible product form, the communication apparatus described in embodiments of this application may be implemented by a general bus architecture. For ease of description, FIG. 6 is a diagram of a structure of a communication apparatus 600 according to an embodiment of this application. The communication apparatus 600 includes a processor 601 and a transceiver 602. The communication apparatus 600 may be an access network device, a core network device, a terminal device, or a chip or a chip system in the access network device, the core network device, or the terminal device. FIG. 6 shows only main components of the communication apparatus 600. In addition to the processor 601 and the transceiver 602, the communication apparatus 600 may further include a memory 603 and an input/output apparatus (not shown in the figure).

Optionally, the processor 601 is mainly configured to: process a communication protocol and communication data, control the entire communication apparatus, execute a software program, and process data of the software program. The memory 603 is mainly configured to store the software program and the data. The transceiver 602 may include a radio frequency circuit and an antenna. The radio frequency circuit is mainly configured to: perform conversion between a baseband signal and a radio frequency signal, and process the radio frequency signal. The antenna is mainly configured to: receive and send radio frequency signals in a form of an electromagnetic wave. The input/output apparatus, for example, a touchscreen, a display, or a keyboard, is mainly configured to: receive data input by a user and output data to the user.

Optionally, the processor 601, the transceiver 602, and the memory 603 may be connected to each other through a communication bus.

After the communication apparatus is powered on, the processor 601 may read the software program in the memory 603, interpret and execute instructions of the software program, and process the data of the software program. When data needs to be wirelessly sent, the processor 601 performs baseband processing on the to-be-sent data, and then outputs a baseband signal to the radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 601. The processor 601 converts the baseband signal into the data, and processes the data.

In another implementation, the radio frequency circuit and the antenna may be disposed independently of the processor that performs baseband processing. For example, in a distributed scenario, the radio frequency circuit and the antenna may be disposed remotely and independently of the communication apparatus.

In some embodiments, in terms of hardware implementation, a person skilled in the art may figure out that the communication apparatus 500 may be in a form of the communication apparatus 600 shown in FIG. 6.

In an example, a function/implementation process of the processing unit 502 in FIG. 5 may be implemented by the processor 601 in the communication apparatus 600 shown in FIG. 6 by invoking the computer-executable instructions stored in the memory 603. A function/implementation process of the communication unit 503 in FIG. 5 may be implemented by the transceiver 602 in the communication apparatus 600 shown in FIG. 6.

In another possible product form, a terminal apparatus in this application may use a composition structure shown in FIG. 7, or include parts shown in FIG. 7. FIG. 7 is a diagram of composition of a communication apparatus 700 according to this application.

As shown in FIG. 7, the communication apparatus 700 includes at least one processor 701. Optionally, the communication apparatus further includes a communication interface 702.

When related program instructions are executed on the at least one processor 701, the apparatus 700 may be enabled to implement the communication method provided in any one of the foregoing embodiments and any possible design thereof. Alternatively, the processor 701 is configured to implement, through a logic circuit or by executing code instructions, the method provided in any one of the foregoing embodiments and any possible design thereof.

The communication interface 702 may be configured to: receive the program instructions and transmit the program instructions to the processor, or the communication interface 702 may be used by the communication apparatus 700 to perform communication interaction, for example, exchange control signaling and/or service data, with another communication device. For example, the communication interface 702 may be configured to: receive a signal from an apparatus other than the communication apparatus 700 and transmit the signal to the processor 701, or send a signal from the processor 701 to a communication apparatus other than the communication apparatus 700.

Optionally, the communication interface 702 may be a code and/or data read/write interface circuit, or the communication interface 702 may be a signal transmission interface circuit between a communication processor and a transceiver, or may be a pin of a chip.

Optionally, the communication apparatus 700 may further include at least one memory 703. The memory 703 may be configured to store the required related program instructions and/or data. It should be noted that the memory 703 may be independent of the processor 701, or may be integrated with the processor 701. The memory 703 may be located inside the communication apparatus 700, or may be located outside the communication apparatus 700. This is not limited.

Optionally, the communication apparatus 700 may further include a power supply circuit 704. The power supply circuit 704 may be configured to supply power to the processor 701. The power supply circuit 704 may be located in a same chip as the processor 701, or may be located in a chip other than a chip in which the processor 701 is located.

Optionally, the communication apparatus 700 may further include a bus 705, and parts of the communication apparatus 700 may be interconnected through the bus 705.

In some embodiments, in terms of hardware implementation, a person skilled in the art may figure out that the communication apparatus 500 shown in FIG. 5 may be in a form of the communication apparatus 700 shown in FIG. 7.

In an example, a function/implementation process of the processing unit 502 in FIG. 5 may be implemented by the processor 701 in the communication apparatus 700 shown in FIG. 7 by invoking the computer-executable instructions stored in the memory 703. A function/implementation process of the communication unit 503 in FIG. 5 may be implemented by the communication interface 702 in the communication apparatus 700 shown in FIG. 7.

It should be noted that the structure shown in FIG. 7 does not constitute a specific limitation on the terminal apparatus. For example, in some other embodiments of this application, the terminal apparatus may include more or fewer components than those shown in the figure, or a combination of a part of the components, or splits from a part of the components, or an arrangement of different components. The components shown in the figure may be implemented by hardware, software, or a combination of the software and the hardware.

Optionally, the processor in this application may be a CPU, or the processor may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

The terms "system" and "network" in embodiments of this application may be interchangeably used. "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects. "At least one of the following items (pieces)" or a similar expression thereof means any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" mentioned in embodiments of this application are intended to distinguish between a plurality of objects, and are not intended to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a magnetic disk storage, an optical storage, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus configured to implement a specified function in one or more procedures in the flowcharts and/or a specified function in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specified function in one or more procedures in the flowcharts and/or a specified function in one or more blocks in the block diagrams.

These computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specified function in one or more procedures in the flowcharts and/or a specified function in one or more blocks in the block diagrams.

It is clear that a person skilled in the art can make various modifications and variations to this application without departing from the spirit and scope of this application. In this case, this application is also intended to cover these modifications and variations of this application provided that they fall within the scope of the claims of this application and their equivalent technologies.

## Claims

1. A communication method, wherein the method comprises:
receiving configuration information of a quality of service QoS flow from a core network device, wherein the configuration information of the QoS flow comprises a first value and a second value of each of M QoS parameters, and M is a positive integer;
determining a third value of each of the M QoS parameters based on the first value and the second value of the QoS parameter in the M QoS parameters; and
transmitting a data packet in the QoS flow based on the third value of each of the M QoS parameters, wherein
a transmission requirement corresponding to the third value of each of the M QoS parameters is lower than or equal to a transmission requirement corresponding to the first value of the QoS parameter, and higher than or equal to a transmission requirement corresponding to the second value of the QoS parameter.

2. The method according to claim 1, wherein the configuration information of the QoS flow comprises first indication information, and the first indication information indicates that, when a third value of at least one of the M QoS parameters changes, the core network device does not need to be notified.

3. The method according to claim 1 or 2, wherein the configuration information of the QoS flow further comprises a first value of each of N QoS parameters; and
transmitting the data packet in the QoS flow based on the third value of each of the M QoS parameters comprises:
transmitting the data packet in the QoS flow based on the third value of each of the M QoS parameters and the first value of each of the N QoS parameters.

4. The method according to any one of claims 1 to 3, wherein the configuration information of the QoS flow comprises first QoS description information, and the first QoS description information comprises the first value and the second value of each of the M QoS parameters; or
the configuration information of the QoS flow comprises second QoS description information and third QoS description information, the second QoS description information comprises the first value of each of the M QoS parameters, and the second QoS description information comprises the second value of each of the M QoS parameters.

5. The method according to any one of claims 1 to 4, wherein the QoS flow comprises a first data packet and a second data packet, a transmission metric of the first data packet meets the transmission requirement corresponding to the first value of each of the M QoS parameters, and the second data packet is a data packet other than the first data packet in the QoS flow; and
a ratio of a quantity of second data packets to a total quantity of data packets in the QoS flow is less than or equal to a threshold.

6. The method according to claim 5, wherein the threshold is comprised in the configuration information of the QoS flow, or the threshold is preconfigured.

7. The method according to any one of claims 1 to 6, wherein the QoS flow comprises the first data packet and the second data packet, the transmission metric of the first data packet meets the transmission requirement corresponding to the first value of each of the M QoS parameters, and the second data packet is a data packet other than the first data packet in the QoS flow; and
the method further comprises:
determining a first ratio of a quantity of first data packets to the total quantity of data packets in the QoS flow, and/or a second ratio of the quantity of second data packets to the total quantity of data packets in the QoS flow; and
sending the first ratio and/or the second ratio to the core network device.

8. The method according to any one of claims 1 to 7, wherein the method further comprises:
sending, to a terminal device, configuration information of a data radio bearer DRB corresponding to the QoS flow, wherein the configuration information of the DRB is determined based on the second value of each of the M QoS parameters.

9. The method according to claim 8, wherein the configuration information of the DRB comprises duration of a discard timer corresponding to the data packet in the QoS flow.

10. The method according to any one of claims 1 to 9, wherein the method further comprises:
receiving second indication information from the terminal device, wherein the second indication information indicates a recommended third value of each of the M QoS parameters.

11. The method according to any one of claims 1 to 10, wherein the M QoS parameters comprise at least one of the following:
a transmission delay, a transmission reliability, and a transmission rate.

12. A communication method, wherein the method comprises:
determining configuration information of a QoS flow, wherein the configuration information of the QoS flow comprises a first value and a second value of each of M QoS parameters, the first value and the second value of each of the M QoS parameters are used to determine a third value of the QoS parameter, and the third value of each of the M QoS parameters is used to transmit a data packet in the QoS flow; and
sending the configuration information of the QoS flow to an access network device and/or a terminal device, wherein
a transmission requirement corresponding to the third value of each of the M QoS parameters is lower than or equal to a transmission requirement corresponding to the first value of the QoS parameter, and higher than or equal to a transmission requirement corresponding to the second value of the QoS parameter, and M is a positive integer.

13. The method according to claim 12, wherein the configuration information of the QoS flow comprises first indication information, and the first indication information indicates that, when a third value of at least one of the M QoS parameters changes, the core network device does not need to be notified.

14. The method according to claim 12 or 13, wherein the configuration information of the QoS flow comprises first QoS description information, and the first QoS description information comprises the first value and the second value of each of the M QoS parameters; or
the configuration information of the QoS flow comprises second QoS description information and third QoS description information, the second QoS description information comprises the first value of each of the M QoS parameters, and the second QoS description information comprises the second value of each of the M QoS parameters.

15. The method according to any one of claims 12 to 14, wherein the QoS flow comprises a first data packet and a second data packet, a transmission metric of the first data packet meets the transmission requirement corresponding to the first value of each of the M QoS parameters, and the second data packet is a data packet other than the first data packet in the QoS flow; and
the configuration information of the QoS flow comprises a threshold, and a ratio of a quantity of second data packets to a total quantity of data packets in the QoS flow is less than or equal to the threshold.

16. The method according to any one of claims 12 to 15, wherein the QoS flow comprises the first data packet and the second data packet, the transmission metric of the first data packet meets the transmission requirement corresponding to the first value of each of the M QoS parameters, and the second data packet is a data packet other than the first data packet in the QoS flow; and
the method further comprises:
receiving a first ratio of a quantity of first data packets to the total quantity of data packets in the QoS flow, and/or a second ratio of the quantity of second data packets to the total quantity of data packets in the QoS flow.

17. A communication method, wherein the method comprises:
receiving configuration information of a QoS flow from a core network device, wherein the configuration information of the QoS flow comprises a first value and a second value of each of M QoS parameters, and M is a positive integer; and
determining, based on the configuration information of the QoS flow, that a data packet in the QoS flow supports a relaxed transmission.

18. The method according to claim 17, wherein the method further comprises:
sending second indication information to an access network device, wherein the second indication information indicates a recommended third value of at least one of the M QoS parameters.

19. The method according to claim 17 or 18, wherein the method further comprises:
receiving configuration information of a data radio bearer DRB corresponding to the QoS flow, wherein the configuration information of the DRB is determined based on the second value of each of the M QoS parameters.

20. The method according to claim 19, wherein the configuration information of the DRB comprises duration of a discard timer corresponding to the data packet in the QoS flow.

21. A communication apparatus, comprising a module configured to perform the method according to any one of claims 1 to 20.

22. A communication apparatus, comprising a processor, wherein the processor is coupled to a memory, the memory stores a computer program, and the processor is configured to invoke the computer program in the memory, to enable the communication apparatus to perform the method according to any one of claims 1 to 20.

23. A communication system, wherein the communication system comprises an access network device, a core network device, and a terminal device, the access network device is configured to perform the method according to any one of claims 1 to 11, the core network device is configured to perform the method according to any one of claims 12 to 16, and the terminal device is configured to perform the method according to any one of claims 17 to 20.

24. A computer-readable storage medium, wherein the storage medium stores a computer program or instructions, and when the computer program or the instructions are executed by a computer, the method according to any one of claims 1 to 20 is implemented.

25. A computer program product, wherein when a computer reads and executes the computer program product, the computer is enabled to perform the method according to any one of claims 1 to 20.
